# EUROPEAN PATENT SPECIFICATION

(11) **EP 0 417 025 B1**
(45) Date of publication and mention of the grant of the patent: **10.03.1993**
(21) Application number: 90500084.0
(22) Date of filing: 07.08.1990
(51) Int. Cl.: A01K 11/00

(54) **Apparatus for fixing identification tags on animals**
Werkzeug zum Vernieten von Kennzeichnungsmarken für Tiere
Dispositif pour l'application de marqueurs d'identification sur du bétail

(30) Priority: 28.08.1989 ES 8902676
(43) Date of publication of application: 13.03.1991
(73) Proprietor: Sanchez Perez, Francisco, E-08301 Mataro, Barcelona (ES)
(72) Inventor: Sanchez Perez, Francisco, E-08301 Mataro, Barcelona (ES)
(74) Representative: Gomez-Acebo y Pombo, José Miguel

(56) References cited:
- EP-A- 0 092 408
- FR-A- 2 345 913
- FR-A- 2 371 139
- FR-A- 2 435 902
- US-A- 2 570 048

## Description

The present invention refers to an apparatus for fixing identification tags on animals.

This apparatus is of the pincer type, which carry means for placing the tag on one side and fixing said tag on the ear of the animal, said tag carrying any characteristic or numbering which corresponds to the animal.

From French patent no. 2345913, and its certificate of addition no. 2371139, apparatus of the type under consideration, i.e., having a fast disengaging system once the tag has been attached and without having to again use the handles of the apparatus, are already known. Nevertheless, these cases include a rachet and spring system with a corresponding arrester or stop piece.

The apparatus of this invention, which is of the pincer type, is composed of two sections or "arms" which have, in their central part, longitudinal gaps, mentioned gaps being connected to each other by metal strips crosswise to each other and interconnected to each other in an overlapping position by a pin situated in their center, one end of each strip on the same side, close to the handle of the apparatus, rotating on their axis within the gap due to having corresponding fixed axis of rotation, while the two other opposed ends have, at their extremities, a channel or cut that is "L"-shaped, the internal angle of which is a right angle while the external part is rounded .

Each of the "L"-shaped channels has a pin which is located so that, upon rotation of the strips, said strips travel along the longer section of the corresponding "L"-shaped channel with the help of the pin and also the tension of a spring mounted on the central pin of the strips and their rotating ends mentioned above.

When both pins of the "L"-shaped channel are at the juncture of the two legs of the "L", the tag closes and is fixed, and the pins travel to the other or shorter leg of the "L"-shaped channel, resulting in the opening of the taging end of the apparatus while its opposite ends, corresponding to the handle, remain closed.

The Apparatus of the pincer type according to this invention as claimed in claim 1 for fixing identification tags on animals, comprises two symmetric elongate section;
two elongate susbtantially rectangular metal strips each having the same form and comprising a pivot-end;
both sections and both strips being arranged parallel to a common plane;
said sections having front ends for the holding and closing of identification tags;
said sections being connected to each other by means of said strips;
a respective pivot-pin being fixed to each section perpendicular to said common plane for connecting a respective one of said pivot-ends to said section of the apparatus in a rotatable manner;
said strips being pivotally connected to each other in an overlapping and crosswise manner by a central pin which carries a spring comprising two spring-ends;
said apparatus being provided at its end opposite to said front ends with two handles;
two guide-pins each of which extends perpendicularly to said common plane through a respective guide channel extending parallel to said plane;
wherein the apparatus is so arranged that when pressing the handles together the two said sections, while staying parallel, approach each other until they touch in order to close a tag, thereafter as pressure is maintained in the handles, the front ends open and remain open while the handles remain closed, to facilitate the removal of the closed tag from the front ends, said apparatus being
characterised by
each said section comprising two faces substantially parallel to said common plane, a longitudinal gap being provided in the central part of each section between said faces;
each said spring-end being fixed to a respective said pivot-pin;
each said section being provided a respective one of said two handles;
each said pivot-pin being fixed to a respective said section adjacent aid handle;
each said strip comprising said respective guide channel at the end opposite to said pivot-end;
each said guide-pin being fixed to a respective said section adjacent said front end, said guide-pin extending from one said face to the other through said longitudinal gap therebetween;
each said channel being substantially "L"-shaped, the longer leg of said "L"-shaped channel being positioned substantially parallel to a longitudinal axis of said strip, the shorter leg joining the longer leg at the end thereof closer to said pivot-end and being directed away from the centreline of the apparatus;
each said strip being at least partly located in a respective said longitudinal gap where said guide-pin extends through said "L"-shaped channel;
wherein the apparatus is so arranged that when pressing the handles together, each guide-pin passes along the longer leg of the channel, and the two said sections, while staying parallel, approach each other until they touch in order to close a tag, at which instant both guide-pins reach the junctures of the legs of the "L"-shaped channels, thereafter as pressure is maintained on the handles the guide-pins pass up the shorter legs of the "L"-shaped channels, causing the front ends to open and remain open while the handles remain closed.

In order to better understand not only the construction of the apparatus of this invention, but also how same operates, following is an example of a possible modality of the apparatus, however understanding that this is simply an example and should in no manner serve as a limitation of the invention as claimed, the example corresponding to the enclosed drawings in which:

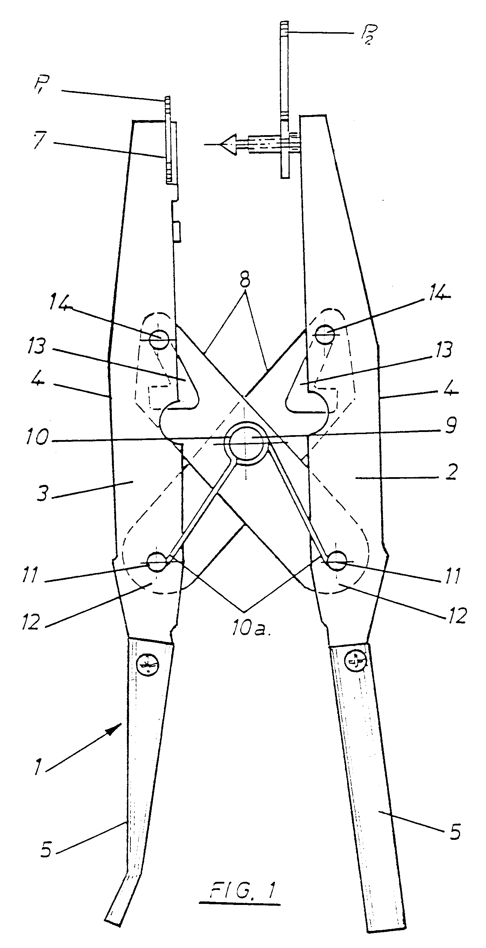

Figure 1 is a top view of the apparatus in an open position, with the tag naturally still being divided in 2 sections or parts.

Figure 2 is a side view of the apparatus in a closed position, consequently with both sections of the tag united.

Figure 3 is a view of the apparatus similar to that of Figure 2, but with the front end in an open position and the tag already closed.

The apparatus 1 shown in all the figures is of the pincer type, composed of two sections 2 and 3, each of which has a gap 4 in its central section, both gaps facing each other, while each section has, at one end, a handle 5.

Section 2 has a protrusion or projection 6 in its front end while section 3 has, in the same extremity, an indenture 7 in which one section of the tag P₁ is placed, while the other section P₂ of the tag is placed on protrusion 6.

Sections 2 and 3 are connected by two rectangular metal strips 8, which have the same form, are placed one on top of the other and crosswise to each other, connected one to the other at their center by means of a pin/center of rotation 9 on which a spring 10 is mounted, the ends 10a of which are fixed to pins 11 which serve as pivoting points for the ends 12 of each metal strip with regard to corresponding sections 2 and 3. In like manner, each metal strip has, at its opposite end, an "L"-shaped channel 13 which allows the connection of each metal strip 8 with a pin 14 which is fixedly mounted on on each section 2 and 3.

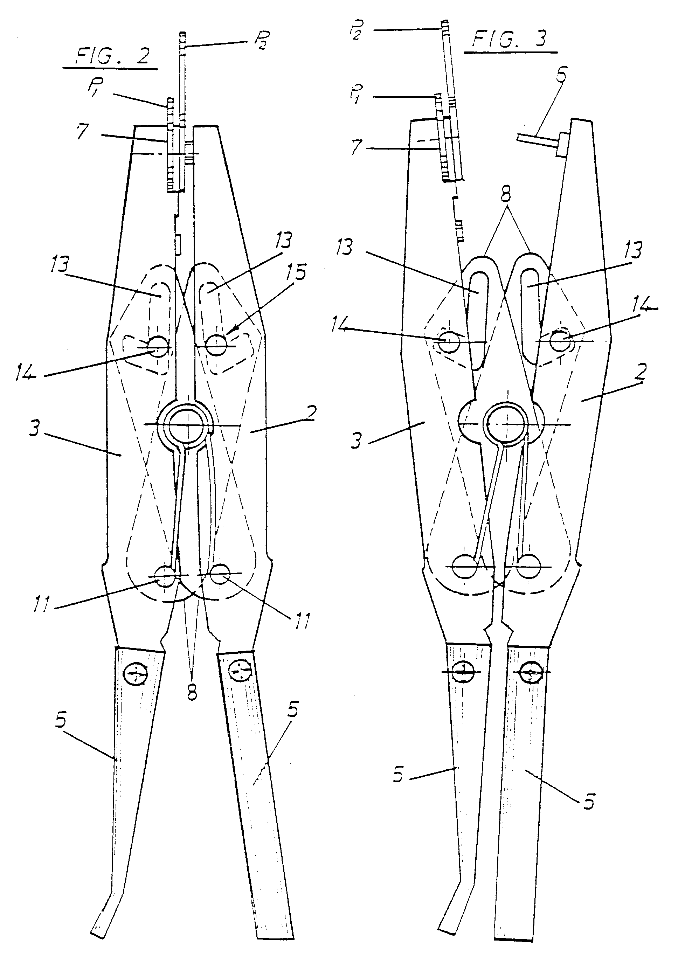

Upon closing the apparatus, with the corresponding fixing of the tag, see figure 2, each metal strip 8 moving along its corresponding longitudinal part of the channel 13, each of the mentioned channels 13 has its angle 15 facing the corresponding pin 14. From this moment onward, and upon continued application of pressure on the handle, the metal strips 8 rotate and the pins 14 travel along towards the end of the shorter leg of the "L"-shaped channel 13, at which time the apparatus takes the position shown in Figure 3, i.e., open position but with the handle end closed, which helps in the removal of the tag from the tip of the apparatus.

## Claims

1. Apparatus of the pincer type for fixing identification tags on animals, comprising two symmetric elongate section (2, 3);
two elongate susbtantially rectangular metal strips (8) each having the same form and comprising a pivot-end (12);
both sections (2, 3) and both strips (8) being arranged parallel to a common plane;
said sections having front ends (6, 7) for the holding and closing of identification tags (P1, P2);
said sections (2, 3) being connected to each other by means of said strips (8);
a respective pivot-pin (11) being fixed to each section perpendicular to said common plane for connecting a respective one of said pivot-ends (12) to said section (2, 3) of the apparatus in a rotatable manner;
said strips (8) being pivotally connected to each other in a overlapping and crosswise manner by a central pin (9) which carries a spring (10) comprising two spring-ends (10a);
said apparatus being provided at its end opposite to said front ends (6, 7) with two handles (5);
two guide-pins (14) each of which extends perpendicularly to said common plane through a respective guide channel (13) extending parallel to said plane;
wherein the apparatus is so arranged that when pressing the handles (5) together the two said sections (2, 3), while staying parallel, approach each other until they touch in order to close a tag (P1/P2), thereafter as pressure is maintained on the handles (5), the front ends (6, 7) open and remain open while the handles (5) remain closed, to facilitate the removal of the closed tag (P1/P2) from the front ends
characterised by
each said section (2, 3) comprising two faces substantially parallel to said common plane, a longitudinal gap (4) being provided in the central part of each section between said faces;
each said spring-end (10a) being fixed to a respective said pivot-pin (11);
each said section (2, 3) being provided a respective one of said two handles (5);
each said pivot-pin (11) being fixed to a respective said section (2, 3) adjacent said handle (5) ;
each said strip (8) comprising said respective guide channel (13) at the end opposite to said pivot-end (12);
each said guide-pin (14) being fixed to a respective said section (2, 3) adjacent said front end (6, 7), said guide-pin (14) extending from one said face to the other through said longitudinal gap (4) therebetween;
each said channel (13) being substantially "L"-shaped, the longer leg of said "L"-shaped channel being positioned substantially parallel to a longitudinal axis of said strip (8), the shorter leg joining the longer leg at the end thereof closer to said pivot-end (12) and being directed away from the centreline of the apparatus;
each said strip (8) being at least partly located in a respective said longitudinal gap (4) where said guide-pin (14) extends through said "L"-shaped channel (13);
wherein the apparatus is so arranged that when pressing the handles (5) together, each guide-pin (14) passes along the longer leg of the channel (13), and the two said sections (2, 3), while staying parallel, approach each other until they touch in order to close a tag (P1/P2), at which instant both guide-pins (14) reach the junctures (15) of the legs of the "L"-shaped channels, thereafter as pressure is maintained on the handles (5) the guide-pins (14) pass up the shorter legs of the "L"-shaped channels (13), causing the front ends (6, 7) to open and remain open while the handles (5) remain closed.

## Patentansprüche

1. Werkzeug vom Zangentyp zum Vernieten von Kennzeichnungsmarken an Tieren,
a) mit zwei symmetrischen, länglichen Teilen (2, 3),
b) mit zwei länglichen, im wesentlichen rechteckigen, gleich gestalteten Metalleisten (8), die jeweils ein Schwenk-Ende (12) aufweisen,
c) wobei beide Teile (2, 3) und beide Leisten (8) zu einer gemeinsamen Ebene parallel angeordnet sind,
d) wobei diese Teile vordere Enden (6, 7) zum Halten und Schließen von Kennzeichnungsmarken (P1, P2) aufweisen,
e) wobei diese Teile (2, 3) miteinander mittels dieser Leisten (8) verbunden sind,
f) mit einem Drehbolzen (11), welcher mit jedem Teil, senkrecht zur gemeinsamen Ebene, verbunden ist, um jeweils ein Schwenk-Ende (12) mit dem entsprechenden Teil (2, 3) des Werkzeuges drehbar zu verbinden,
g) wobei mittels eines Mittelbolzens (9) die Leisten (8) miteinander drehbar und kreuzweise sich überlappend verbunden sind und der Mittelbolzen (9) eine Feder (10) mit zwei Federenden (10a) trägt,
h) wobei dieses Werkzeug an denjenigen Enden, die den vorderen Enden (6, 7) entgegengesetzt sind, mit zwei Griffen (5) versehen ist,
i) mit zwei Führungsbolzen (14), welche sich jeweils senkrecht zur gemeinsamen Ebene durch eine entsprechende Führungs-Ausnehmung (13) erstrecken, wobei sich diese Ausnehmung (13) parallel zur Ebene erstreckt,
k) wobei das Werkzeug derart konstruiert ist, daß beim Zusammendrücken der Griffe (5) die beiden Teile (2, 3), in paralleler Stellung verbleibend, sich einander so weit nähern, bis sie sich berühren, um die Marke (P1/P2) zu schließen,
l) und daß danach, unter Aufrechterhaltung des Druckes auf die beiden Griffe (5), die vorderen Enden (6, 7) sich öffnen und offenbleiben, während die Griffe (5) geschlossen bleiben, um das Entfernen der geschlossenen Marke (P1/P2) von den vorderen Enden zu erleichtern,
dadurch gekennzeichnet,
1. daß jedes Teil (2, 3) zwei der besagten gemeinsamen Ebene im wesentlichen parallele Flächen aufweist, wobei ein länglicher Zwischenraum (4) im Mittelteil jedes Teils zwischen besagten Flächen vorgesehen ist,
2. daß jedes Federende (10a) an dem entsprechenden Drehbolzen (11) befestigt ist,
3. daß jedes Teil (2, 3) mit dem entsprechenden Griff (5) versehen ist,
4. daß jeder Drehbolzen (11), in der Nähe des Griffes (5), an dem entsprechenden Teil (2, 3) befestigt ist,
5. daß jede Leiste (8) an dem dem Schwenk-Ende (12) abgewandten Ende die Führungsaussparung (13) aufweist,
6. daß jeder Führungsbolzen (14) nahe dem vorderen Ende (6, 7) am entsprechenden Teil (2, 3) befestigt ist und sich, durch den länglichen Zwischenraum (4), von einer Fläche zur anderen hindurch, erstreckt,
7. daß die Aussparung (13) im wesentlichen L-förmig gestaltet ist,
- wobei der längere L-Schenkel im wesentlichen parallel der Längsachse der Leiste (8) angeordnet ist und
- wobei der kürzere Schenkel sich mit dem längeren Schenkel an dessen dem Schwenkende (12) näheren Ende vereinigt und von der Mittellinie des Werkzeuges weg-weist,
8. daß jede Leiste (8) zumindest teilweise im entsprechenden länglichen Zwischenraum (4) angeordnet ist, wo der Führungs-bolzen (14) sich durch die L-förmige Aussparung (13) erstreckt,
9. und daß das Werkzeug derart ausgebildet ist,
- daß beim Zusammendrücken der Griffe (5) jeder Führungsbolzen (14) den längeren Schenkel der Aussparung (13) durchläuft und die beiden Teile (2, 3), während sie in paralleler Stellung verbleiben, sich einander so weit annähern, bis sie sich berühren, um eine Kennzeichnungs-Marke (P1/P2) zu schließen,
- daß in diesem Augenblick beide Führungsbolzen (14) an die Vereinigungspunkte (15) der Schenkel der L-förmig gestalteten Aussparungen (13) gelangen,
- und daß danach, wenn der Druck auf die Griffe (5) aufrechterhalten wird, die Führungsbolzen (14) längs der kürzeren Schenkel der L-förmigen Aussparungen (13) hinaufgleiten, so daß sich die vorderen Enden (6, 7) öffnen und offen bleiben, wogegen die Griffe (5) geschlossen bleiben.

## Revendications

1. Appareil du genre d'une pince pour fixer des plaquettes de marquage sur des animaux, comprenant deux parties allongées symétriques (2, 3);
deux bandes métalliques allongées sensiblement rectangulaires (8), chacune présentant la même forme et comprenant une extrémité pivotante (12) ; les deux parties (2, 3) et les deux bandes (8) étant disposées parallèlement à un plan commun ;
lesdites parties comportant des extrémités antérieures (6, 7) pour maintenir et fermer des plaquettes de marquage (P1, P2) ;
lesdites parties (2, 3) étant reliées l'une à l'autre au moyen desdites bandes (8) ;
un pivot respectif (11) étant fixé à chaque partie perpendiculairement audit plan commun pour relier, d'une manière tournante, l'une desdites extrémités pivotantes (12) qui lui est associée à ladite partie (2, 3) de l'appareil ;
lesdites bandes (8) étant reliées l'une à l'autre en pivotement en se chevauchant en croix, par un pivot central (9) qui porte un ressort (10) comprenant deux extrémités de ressort (10a) ;
ledit appareil étant pourvu de deux poignées (5) à son extrémité opposée auxdites extrémités antérieures (6, 7);
deux pivots de guidage (14), dont chacun s'étend perpendiculairement audit plan commun à travers un canal de guidage respectif (13) qui s'étend parallèlement audit plan ;
dans lequel l'appareil est réalisé d'une manière telle que, lorsque l'on appuie sur les poignées (5) pour les rapprocher, lesdites deux parties (2, 3) tout en restant parallèles, s'approchent l'une de l'autre jusqu'à ce qu'elles se touchent de façon à fermer une plaquette (P1, P2), après quoi, lorsque la pression est maintenue sur les poignées (5), les extrémités antérieures (6, 7) s'ouvrent et restent ouvertes tandis que les poignées (5) restent fermées, afin qu'il soit plus facile d'enlever la plaquette fermée (P1, P2) des extrémités antérieures, caractérisé par le fait que :
chacune desdites parties (2, 3) comprend deux faces sensiblement parallèles audit plan commun, un intervalle longitudinal (4) étant prévu dans la partie centrale de chaque partie entre lesdites faces ;
chacune desdites extrémités de ressort (10a) est fixée à l'un desdits pivots (11) qui lui est associé ;
chacune desdites parties (2, 3) est pouvue de l'une desdites deux poignées (5) qui lui est associée ;
chacun desdits pivots (11) est fixé à l'une desdites parties (2, 3) qui lui est associée au voisinage de ladite poignée (5) ;
chacune desdites bandes (8) comprend ledit canal de guidage respectif (13) à son extrémité qui est opposée à ladite extrémité pivotante (12) ;
chacun desdits pivots de guidage (14) est fixé à l'une desdites parties (2, 3) qui lui est associée, au voisinage de ladite extrémité antérieure (6, 7), ledit pivot de guidage (14) s'étendant de l'une desdites faces jusqu'à l'autre à travers ledit intervalle longitudinal (4) ménagé entre elles ;
chacun desdits canaux (13) est sensiblement en forme de L, la branche la plus longue dudit canal en forme de L étant disposée d'une manière sensiblement parallèle à un axe longitudinal de ladite bande (8), la branche la plus courte rejoignant la branche la plus longue à l'extrémité de celle-ci qui est la plus proche de ladite extrémité pivotante (12) en étant dirigée en s'écartant de l'axe central de l'appareil ;
chacune desdites bandes (8) est située, du moins partiellement, dans l'un desdits intervalles longitudinaux (4) qui lui est associé et dans lequel ledit pivot de guidage (14) s'étend à travers ledit canal en forme de L (13) ;
dans lequel l'appareil est réalisé d'une manière telle que, lorsque l'on appuie sur les poignées (5) pour les rapprocher, chaque pivot de guidage (14) passe le long de la plus longue branche du canal (13), et lesdites deux parties (2, 3), tout en restant parallèles, s'approchent l'une de l'autre jusqu'à ce qu'elles se touchent de façon à fermer une plaquette (P1, P2), et, à cet instant, les deux pivots de guidage (14) atteignent les points de jonction (15) des branches des canaux en forme de L, après quoi, lorsque la pression est maintenue sur les poignées (5), les pivots de guidage (14) montent le long des branches les plus courtes des canaux en forme de L (13), ce qui amène les extrémités antérieures (6, 7) à s'ouvrir et à rester ouvertes, tandis que les poignées (5) restent fermées.
